Europäisches Patentamt

European Patent Office

Office européen des brevets

(19)

(11) Numéro de publication : **0 198 146**
**B1**

(12) **FASCICULE DE BREVET EUROPÉEN**

(45) Date de publication du fascicule du brevet :
23.03.88

(21) Numéro de dépôt : **85870053.7**

(22) Date de dépôt : **15.04.85**

(51) Int. Cl.⁴ : **F 28 C   1/00**

(54) **Dispositif d'injection des gaz brûlés dans une tour de réfrigération.**

(43) Date de publication de la demande :
**22.10.86 Bulletin 86/43**

(45) Mention de la délivrance du brevet :
**23.03.88 Bulletin 88/12**

(84) Etats contractants désignés :
**AT BE CH DE FR GB IT LI LU NL SE**

(56) Documents cités :
**DE-A- 2 442 054
DE-A- 2 453 488
DE-A- 3 327 931
DE-C-   347 141
GB-A-   525 702
US-A- 1 394 605
US-A- 3 760 869
US-A- 3 965 672**

(73) Titulaire : **HAMON-SOBELCO S.A.**
**50-58, Rue Capouillet**
**B-1060 Bruxelles (BE)**

(72) Inventeur : **Lemmens, Pierre Lucien**
**56, rue Pieter**
**B-1190 Bruxelles (BE)**
Inventeur : **Schwickert, Manfred Josef**
**Weitmarer-Holzstrasse 5**
**D-4630 Bochum (DE)**

(74) Mandataire : **de Kemmeter, François et al**
**Cabinet Bede 13, avenue Antoine Depage**
**B-1050 Bruxelles (BE)**

EP 0 198 146 B1

## Description

Le domaine d'application de l'invention est constitué par les tours de réfrigération atmosphérique à tirage naturel et à contre-courant des centrales électriques à combustible fossile sulfureux pourvues d'installation de désulfuration des gaz brûlés.

L'invention concerne un dispositif d'injection des gaz brûlés désulfurés de ces centrales électriques dans ces tours de réfrigération.

Pour des raisons écologiques (protection de l'environnement) (essentiellement destinées à enrayer le dépérissement des forêts et l'acidification de lacs, et à sauver leurs faunes et leurs flores), les centrales électriques brûlant des combustibles sulfureux sont contraintes de prendre des mesures telles que les gaz brûlés rejetés à l'atmosphère soient pauvres en soufre. Les mesures considérées consistent à désulfurer les gaz brûlés à la sortie des réchauffeurs d'air.

Les procédés courants de désulfuration consistent à laver les gaz brûlés par des solutions chimiques. Le FR-A-2 534 150 décrit une telle installation. Les gaz brûlés en sortent à température relativement basse, de l'ordre de 80 °C, et sont saturés d'humidité. Ces gaz désulfurés sont trop froids pour être envoyés dans les cheminées normales des centrales électriques ; leur force ascensionnelle est également réduite par cette basse température, ce qui entrave la bonne dispersion des gaz brûlés dans l'atmosphère. En conséquence, il y a intérêt à envoyer les gaz brûlés dans les tours de réfrigération à tirage naturel pour bénéficier de la puissante force ascensionnelle de l'air chaud rejeté pour ces réfrigérants, due essentiellement à leur grand débit d'air, malgré la température de cet air (par exemple 30 °C) inférieure à celle des gaz brûlés désulfurés.

L'idée de rejeter les gaz brûlés par l'intermédiaire des tours de réfrigération à tirage naturel est ancienne. Le DE-C-347 141 de 1922 la révèle déjà. D'autres références sont les documents GB-A-525 702 de 1939, DE-A-1 601 137 de 1967, DE-A-2 228 762 de 1972, DE-A-2 453 488 de 1974, et, plus récemment DE-A-2 738 501 et DE-A-2 752 288 où les gaz brûlés sont désulfurés.

L'injection des gaz brûlés dans les tours de réfrigération à tirage naturel pose des problèmes. En effet, la désulfuration des gaz brûlés n'est pas totale. La teneur initiale en soufre est, par exemple, de l'ordre de 100 g/m$^3$, et elle est abaissée à une valeur de l'ordre du gramme par mètre cube.

Il en est de même des autres composés toxiques des gaz brûlés, notamment les oxydes d'azote NO$_x$. Il est souhaitable de bien diluer ces gaz brûlés dans l'air chaud du réfrigérant, dont le débit est grosso modo 10 fois plus élevé, pour éviter des concentrations locales en produits toxiques relativement élevées à la sortie du réfrigérant, et pour entraîner les gaz brûlés avec le grand flux d'air chaud du réfrigérant comme une seule masse quasi homogène d'air. Le bon mélange des gaz brûlés avec le flux d'air du réfrigérant aura pour effet d'accroître le tirage du réfrigérant grâce à l'élévation de température de la masse d'air mélangé. Ce problème du mélange semble avoir échappé aux inventeurs de divers brevets cités plus haut, notamment de DE-A-2 228 762. Or l'accroissement du tirage est souhaitable non seulement en soi, notamment pour réduire les dimensions du réfrigérant pour une même capacité de réfrigération, mais également pour compenser les pertes de charge supplémentaires du flux d'air du réfrigérant dues aux canalisations de gaz brûlés et aux dispositifs d'injection.

En effet, ces canalisations sont très importantes ; par exemple, pour une tour de réfrigération d'un diamètre de 100 m au niveau du corps d'échange, au-dessus duquel les gaz brûlés seraient injectés, les gaz brûlés seraient injectés par deux canalisations de 7 m de diamètre.

Une caractéristique des gaz brûlés désulfurés est leur saturation en vapeur d'eau, provenant du procédé aqueux de désulfuration. Ceci a pour conséquence que toute baisse de température de ces gaz brûlés provoque la condensation de vapeur d'eau sous forme de micro-gouttelettes, dont les diamètres sont de l'ordre de grandeur du micron. Or, un refroidissement de ces gaz a déjà lieu dans les canalisations qui les amènent à l'intérieur du réfrigérant. Pour l'exemple cité (tour de 100 m de diamètre, desservant un groupe turbogénérateur de 600 MW él), le débit d'eau condensée est de l'ordre de 1 tonne par heure. Ces gouttelettes d'eau vont capter partiellement les oxydes de soufre des gaz brûlés et s'acidifieront de ce fait, leur pH pouvant baisser jusqu'à 2, par exemple.

Les fines gouttelettes, de quelques microns de diamètre, seront entraînées au loin par le flux d'air du réfrigérant et seront ainsi bien dispersées dans l'atmosphère. Par contre les plus grosses gouttes, provenant de la coalescence des fines gouttelettes, ou de l'arrachement de gouttes en provenance de films d'eau formés sur des surfaces plus froides, notamment les parois des canalisations, devront être captées pour qu'elles ne puissent être rejetées dans l'atmosphère par le réfrigérant et retomber dans son voisinage, causant des dégâts par son acidité. Les moyens mis en œuvre pour assurer le mélange des gaz brûlés devront donc éviter de présenter des surfaces de contact qui seraient léchées sur une face par les gaz brûlés relativement chauds (45 à 90 °C) et, sur l'autre face, par le flux d'air du réfrigérant, relativement froid (par exemple 30 °C). En effet, il y aurait formation d'un film d'eau acide sur la face léchée par les gaz brûlés et arrachage de gouttes d'eau de diamètres relativement grands (quelques dixièmes de mm à quelques mm). Des mélangeurs tels que décrits dans les DE-A-3 043 239 ou FR-A-2 275 744 ne conviennent donc pas.

Dans le fascicule de brevet DE-A-3 327 931 est décrit un dispositif d'injection des gaz brûlés désulfurés dans une tour de réfrigération à tirage naturel pourvue d'une coque à travers laquelle les gaz précités sont amenés par au moins une canalisation au-dessus du corps d'échange et des séparateurs de gouttes de la tour de réfrigération.

L'invention a pour objectif un dispositif d'injection des gaz brûlés aux inconvénients précités et qui :

— assure un bon mélange des gaz brûlés dans le flux d'air du réfrigérant ;

— capte les gouttelettes d'eau des gaz brûlés de diamètres supérieurs au diamètre critique au-dessus duquel elles ne seraient plus dispersées loin dans l'atmosphère où elles finiraient par s'évaporer ou par se confondre dans des nuages ;

— recueille ces gouttelettes d'eau et les conduit à l'extérieur du réfrigérant, où elles peuvent, par exemple, être neutralisées puis rejetées à l'égout ;

— ne présente pas, après les séparateurs de gouttes, de surfaces de condensation pour les gaz brûlés ;

— ne présente que de faibles pertes de charges pour le flux d'air du réfrigérant (moins de 10 % des pertes de charge du corps d'échange) et perturbe peu la distribution de l'air dans le corps d'échange du réfrigérant ;

— présente des pertes de charge acceptables pour le flux de gaz brûlés (en comparaison des pertes de charge relativement élevées de ce flux de gaz au travers des installations de désulfuration).

Ces objectifs sont atteints par un dispositif d'injection des gaz brûlés caractérisé en ce que la canalisation est munie d'un moyen de passage des gaz brûlés dans au moins une chambre de régulation de la vitesse des gaz brûlés, laquelle chambre est en communication par l'intermédiaire d'au moins un séparateur de gouttes avec l'intérieur de la tour de réfrigération.

L'invention est maintenant décrite en faisant référence aux dessins ci-annexés dans lesquels :

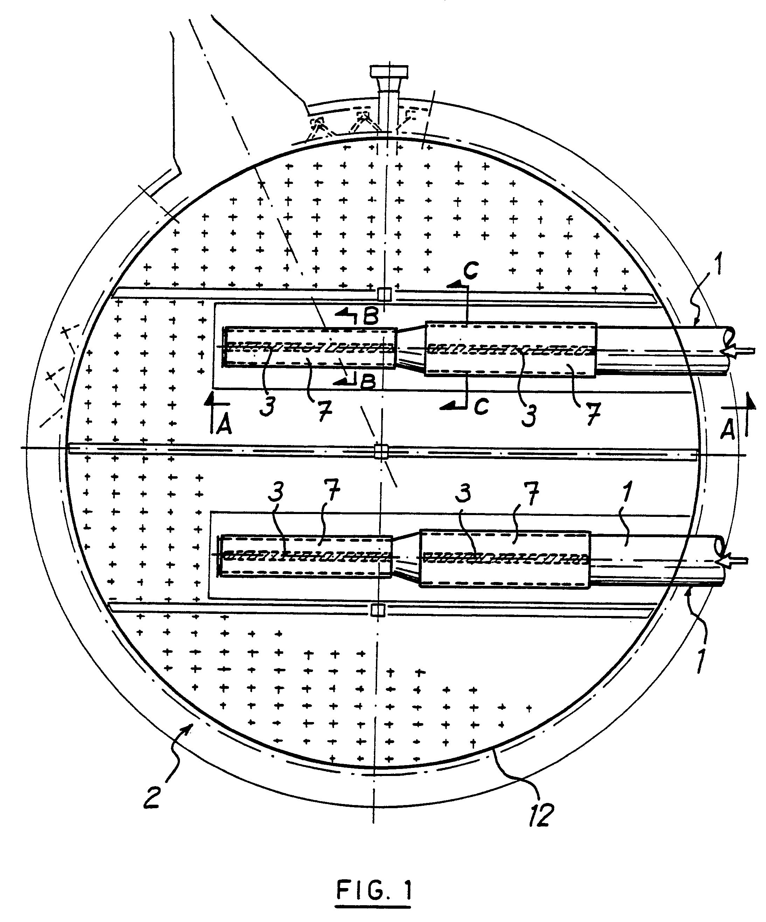

la figure 1 est une vue en coupe horizontale d'une tour de réfrigération à tirage naturel montrant la disposition de deux canalisations d'amenée des gaz brûlés désulfurés dans la tour de réfrigération ;

la figure 2 est une vue en coupe longitudinale verticale d'une des canalisations suivant la ligne A-A de la figure 1 ;

les figures 3A et 3B sont des vues en coupe transversale respectivement suivant la ligne B-B et la ligne C-C de la figure 1 ;

la figure 4 est une vue partiellement en élévation et en coupe du bas de la tour de réfrigération montrant la disposition d'une canalisation d'amenée des gaz brûlés ainsi que son dispositif de support ;

la figure 5 est une variante de la figure 3B et la figure 6 est un détail de la jonction d'un panneau séparateur de gouttes avec le plancher d'un compartiment de régulation de la vitesse des gaz brûlés.

Dans ces différentes figures, les mêmes notations de références désignent les mêmes éléments.

Le dispositif selon l'invention est constitué d'au moins une canalisation horizontale 1 amenant les gaz brûlés dans la tour de réfrigération 2 au-dessus du corps d'échange avec sa distribution et ses séparateurs de gouttes, c'est-à-dire au niveau le plus bas de la cheminée qui soit entièrement dégagé.

Cette canalisation 1 présente à son niveau supérieur une fente 3 relativement étroite, qui s'étend depuis une certaine distance de garde après son passage de la coque 12 du réfrigérant 2 jusqu'à son extrémité, cette canalisation s'arrêtant à une semblable distance de garde de la coque du réfrigérant.

Cette fente s'étend uniquement aux endroits de la canalisation où elle est surmontée d'une succession de compartiments 4 qui ont approximativement la largeur de la canalisation 1, ou sont légèrement plus étroits, et qui sont fermés à leurs niveaux supérieur 7 et inférieur 8, et dont les faces latérales sont constituées de panneaux de séparateurs de gouttes 5 distribuant les gaz brûlés approximativement perpendiculairement à ces faces latérales. Des exemples de réalisation de séparateurs de gouttes appropriés, connues en soi, se trouvent décrits par exemple dans les documents FR-A-2 393 600, DE-A-2 510 754, DE-U-7 821 546, DE-A-3 333 172, FR-A-2 544 997. Les éléments déflecteurs des séparateurs de gouttes 5 sont verticaux ou présentent une franche inclinaison verticale afin de recueillir aisément à la base des panneaux l'eau captée par ces séparateurs de gouttes. La longueur de chaque compartiment 4 est de l'ordre de grandeur du diamètre ou de la largeur de la canalisation. Elle est par exemple de 4 m pour un diamètre de canalisation de 5 à 7 m. Des cloisons verticales 6 ferment ces compartiments perpendiculairement à la longueur de la canalisation ; elles ont pour but d'annuler la composante de vitesse des gaz brûlés suivant la longueur de la canalisation. Afin de réduire l'obstruction présentée par cette canalisation horizontale dans le flux d'air vertical du réfrigérant, la section de la canalisation 1 est réduite dans la mesure où la vitesse des gaz brûlés peut être accrue. Cette vitesse des gaz brûlés au passage de la coque est, par exemple, de 15 à 25 m/s, tandis que la vitesse ascensionnelle de l'air de réfrigération, au niveau de cette canalisation, est de l'ordre de 1,5 à 3 m/s.

Afin d'assurer un bon mélange des gaz brûlés, le débit des gaz doit être aussi égal que possible le long de la fente 3 de la canalisation, c'est pourquoi la fente a de préférence une largeur constante.

Quant à la canalisation, elle peut être circulaire avec un diamètre dégressif qui y maintient approximativement une vitesse constante ; mais cette solution est coûteuse et n'est pas idéale du point de vue pertes de charge. La canalisation peut être circulaire de diamètre unique constant ; la variation de pression à l'intérieur d'une telle canalisation est faible sur la longueur de cette canalisation, ce qui est favorable à l'uniformité du débit le long de la fente. La fente 3 est relativement étroite afin que la variation de pression interne de la canalisation sur la longueur de cette canalisation, c'est-à-dire les pertes de charge des gaz brûlés dans la canalisation, soient pratiquement négligeables vis-à-vis des pertes de charge des gaz brûlés au passage de la fente.

La largeur de la fente est telle, par exemple, que sa section totale de passage (largeur × longueur p. ex. 0,8 m × 2 × 24 m) soit approximativement égale à la section (p. ex. 38 m²) de la canalisation au passage de la coque du réfrigérant.

Afin de réduire le coût de la canalisation, celle-ci peut être constituée de deux (comme représenté) ou d'un petit nombre de tronçons de sections décroissantes à partir du passage de la coque.

La canalisation peut aussi être de section ovale, rectangulaire, voire quelconque.

En fonction de la technologie de construction de la canalisation, les fentes 3 sont ou non entretoisées, c'est-à-dire pourvues d'entretoises ou de tirants maintenant constante son ouverture, situés par exemple entre chaque compartiment ; ces entretoises ou tirants peuvent être, si nécessaire, plus rapprochés, par exemple, à 1 m les uns des autres.

Le toit 7 des compartiments est plat ou bombé.

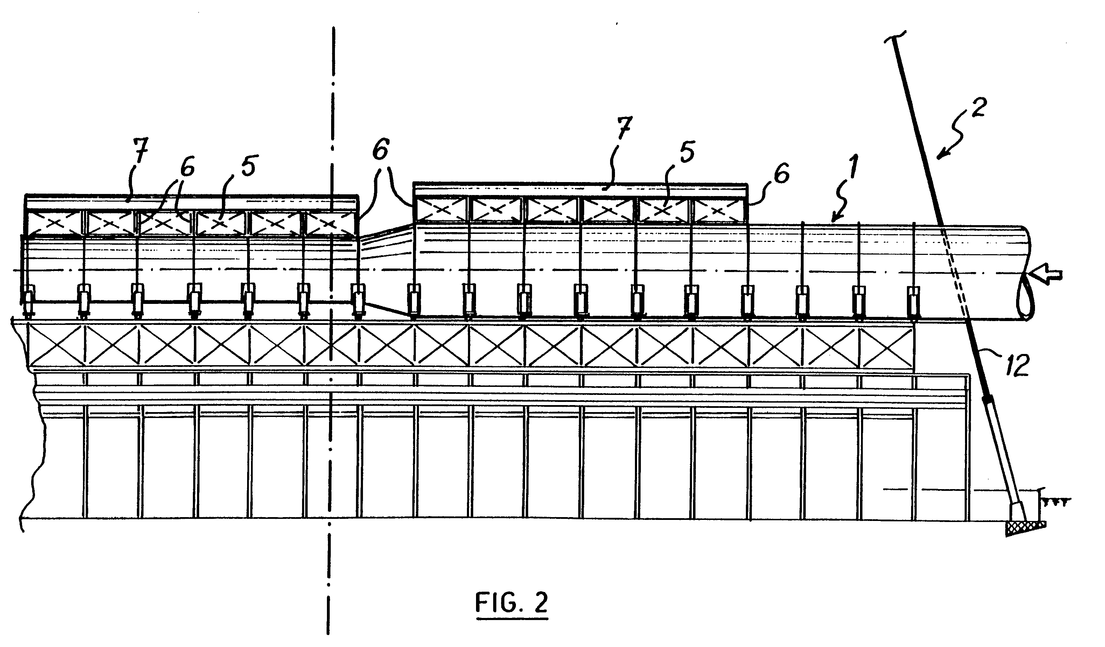

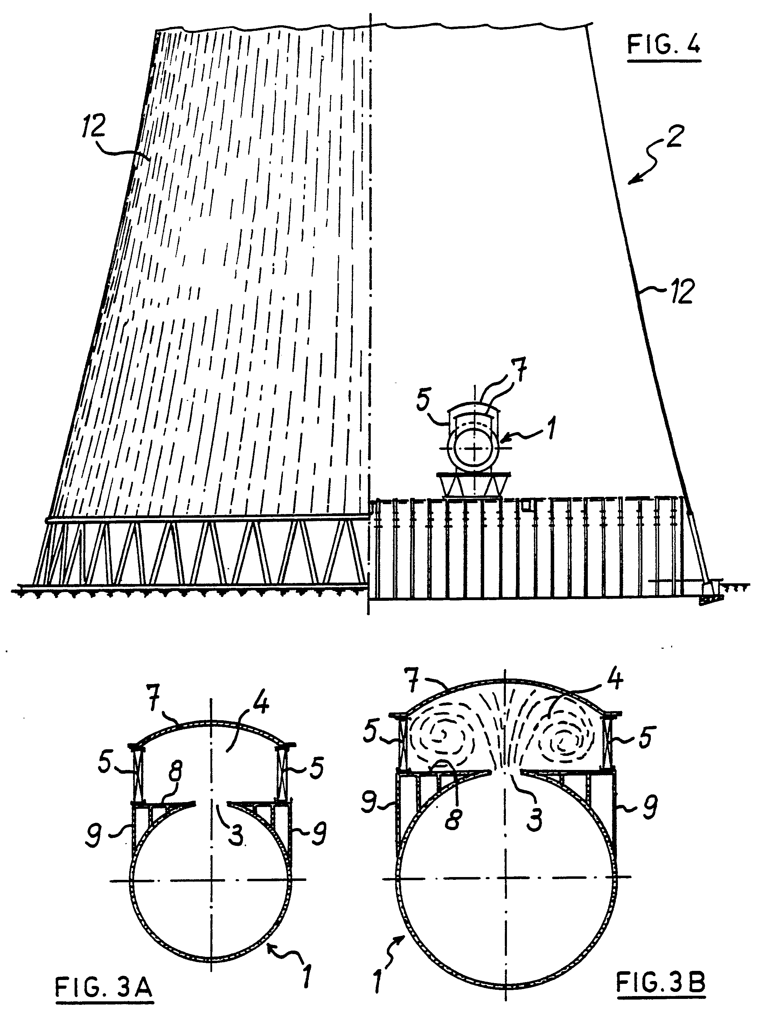

Les gaz brûlés franchissent la fente 3 à une vitesse de l'ordre de grandeur de celle qu'ils ont au passage de la coque, par exemple, 15 à 25 m/s, avec une composante de vitesse oblique, dirigée vers le haut et vers l'extrémité de la canalisation (Fig. 2). Les jets de gaz brûlés des compartiments éclatent sur leurs toits et sur les cloisons situées en aval de chaque compartiment, et se divisent en deux flux se dirigeant respectivement vers chacune des deux faces latérales des compartiments (Fig. 3B).

La hauteur des faces latérales (hauteur de panneaux de séparateurs de gouttes 5) est déterminée par la vitesse maximale qu'on peut admettre pour les gaz brûlés pour qu'il n'y ait pas arrachage de gouttelettes d'eau ; cette vitesse est fonction du type de séparateur de gouttes utilisé, elle est, par exemple, de 5 m/s. Compte tenu d'un manque d'uniformité de la vitesse, la vitesse moyenne est, par exemple, de 4,5 m/s, les gaz brûlés franchissant les panneaux de séparateurs de gouttes à des vitesses comprises entre 4 et 5 m/s. Il s'ensuit que la section totale de ces panneaux est grosso modo quatre fois plus grande que la section de la canalisation au passage de la coque du réfrigérant.

La hauteur des panneaux 5 est en conséquence, en pratique, généralement comprise entre le tiers et le quart du diamètre.

Les compartiments 4 présentent ainsi, d'après leurs proportions, deux chambres de tranquillisation, de part et d'autre de la fente 3, assurant ainsi une bonne uniformité de vitesse des gaz brûlés au travers des séparateurs de gouttes 5.

Lorsqu'il n'y a qu'une canalisation introduisant les gaz brûlés dans la tour de réfrigération, cette canalisation est de préférence située selon un diamètre de la tour 2. Mais, de préférence, il y a deux canalisations parallèles disposées symétriquement dans la tour, permettant une meilleure distribution des gaz brûlés dans la tour.

Il peut aussi y avoir plus de deux canalisations de gaz brûlés, mais de graves problèmes d'encombrement apparaissent vite lorsque le nombre de canalisations croît au-delà de deux.

Les canalisations peuvent aussi ne pas être parallèles entre elles, mais, par exemple, disposées radialement.

Les matériaux des canalisations et des compartiments peuvent être divers, par exemple, l'acier peint, le fibro-ciment, les matières plastiques armées de fibres de verre, le polychlorure de vinyle.

La vitesse des gaz brûlés au sortir des séparateurs de gouttes 5, de 4 à 5 m/s horizontalement, étant nettement plus élevée que la vitesse ascendante de l'air chaud du corps d'échange de chaleur, 1,5 à 3 m/s, la diffusion des gaz brûlés, particulièrement lorsqu'il y a deux canalisations d'amenée des gaz brûlés au réfrigérant, est bien réalisée dans tout le flux d'air du réfrigérant. Des mélanges de 80 à 90 % sont réalisés.

En variante, lorsque la ou les canalisations de gaz sont constituées d'au moins deux tronçons de diamètres décroissants, les compartiments peuvent tous avoir la même largeur, égale notamment à celle du plus petit diamètre de canalisation.

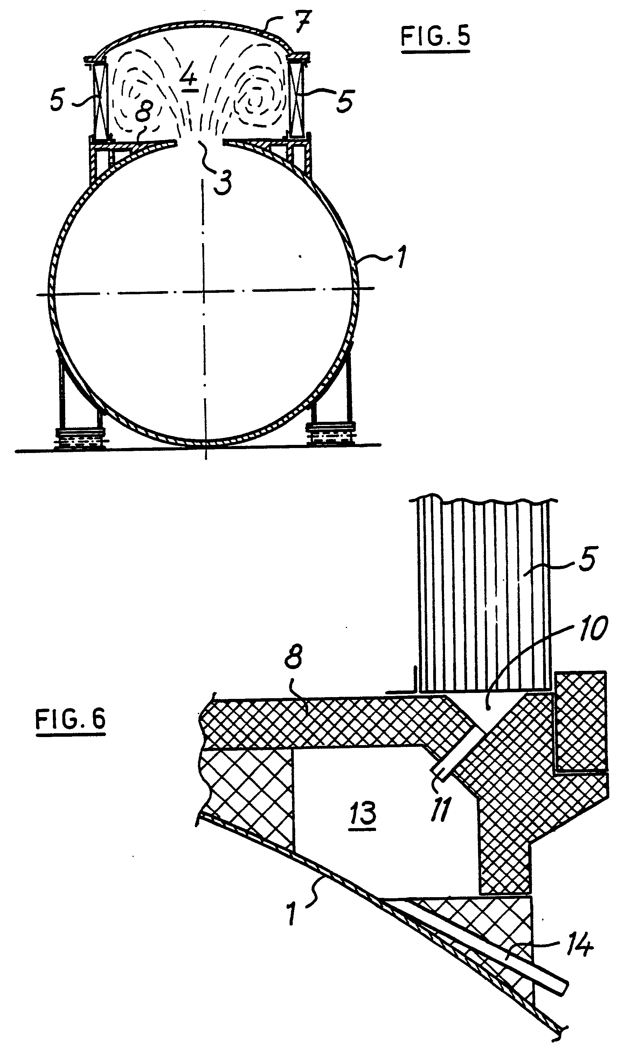

C'est ce qui est représenté à la figure 5 où la canalisation est celle de la figure 3B, tandis que le compartiment 4 est identique à celui qui surmonte la canalisation de plus petit diamètre c'est-à-dire au compartiment représenté à la figure 3A.

En variante, les fermetures inférieures 8 peuvent être constituées par la partie de la canalisation située sous les compartiments, les faces latérales 9 situées dans le prolongement des séparateurs de gouttes 5 étant des parois étanches.

Dans le cas où les fermetures inférieures 8 des compartiments 4 sont constituées de planchers distincts des parois des canalisations 1, ces planchers peuvent être soit horizontaux soit de préférence légèrement inclinés vers l'extérieur pour permettre l'écoulement de l'eau, qui y est condensée vers le bas des panneaux de séparateurs 5, et son évacuation avec celle des séparateurs de gouttes.

L'ensemble des compartiments 4 d'une même section de canalisation peut être continu, les panneaux de séparateurs 5 n'étant séparés que par les éléments de support, et deux compartiments contigus n'étant séparés que par une cloison unique 6. Mais l'ensemble des compartiments 4 d'une même section de canalisation peut aussi être discontinu, chaque compartiment 4 ayant ses propres cloisons 6 en amont pour casser la composante horizontale des gaz brûlés parallèlement à la canalisation, et en aval pour assurer l'étanchéité, les gaz brûlés ne pouvant sortir des canalisations qu'à travers les séparateurs de gouttes.

Les cloisons 6 des compartiments 4 peuvent éventuellement être pourvues d'ouvertures permettant les passages de personnel, par exemple à des fins d'inspection, en l'absence d'injection de gaz brûlés ; ces ouvertures peuvent être pourvues de portes, par exemple coulissantes. Si ces ouvertures ne sont pas pourvues de portes, elles jouxtent les faces latérales 5 afin d'être franchement situées en dehors de la projection de la fente 3 sur la cloison 6 pour que celle-ci maintienne pleinement son rôle vis-à-vis de la composante horizontale de vitesse des gaz franchissant la fente 3. Dans le cas d'un ensemble discontinu de compartiments les ouvertures des deux cloisons contiguës sont reliées par un tunnel étanche.

Comme représenté à la figure 6, les gouttelettes retenues par les panneaux de séparateur de gouttes tombent dans une rigole 10 d'où elles passent par un canal 11 dans l'espace 13 compris entre le plancher 8 et la canalisation 1 pour finalement sortir par un conduit 14 et être ainsi évacuées.

**Revendications**

1. Dispositif d'injection des gaz brûlés désulfurés dans une tour de réfrigération à tirage naturel pourvue d'une coque, à travers laquelle les gaz précités sont amenés par au moins une canalisation au-dessus du corps d'échange et des séparateurs de gouttes de la tour de réfrigération, caractérisé en ce que la canalisation (1) est munie d'un moyen de passage (3) des gaz brûlés dans au moins une chambre (4) de régulation de la vitesse des gaz brûlés, laquelle chambre (4) est en communication par l'intermédiaire d'au moins un séparateur de gouttes (5) avec l'intérieur de la tour de réfrigération (2).

2. Dispositif suivant la revendication 1, caractérisé en ce que la canalisation (1) est horizontale et présente à sa partie supérieure une fente (3) longitudinale surmontée d'une succession de compartiments (4) fermés, en communication avec l'intérieur de la tour de réfrigération par au moins un panneau de séparateur de gouttes (5).

3. Dispositif suivant la revendication 2, caractérisé en ce que les panneaux de séparateur de gouttes (5) forment les faces latérales longitudinales des compartiments (4) qui sont par ailleurs fermés chacun par des cloisons transversales (6), supérieure (7) et inférieure (8).

4. Dispositif suivant la revendication 3, caractérisé en ce que les séparateurs de gouttes (5) ont des éléments déflecteurs verticaux.

5. Dispositif suivant la revendication 3, caractérisé en ce que les séparateurs de gouttes (5) ont des éléments déflecteurs dont l'inclinaison est franchement verticale.

6. Dispositif suivant l'une quelconque des revendications 2 à 5, caractérisé en ce que la largeur de la fente (3) est telle que sa section totale de passage soit approximativement égale à la section de la canalisation au passage de la coque (12).

7. Dispositif suivant l'une quelconque des revendications 2 à 6, caractérisé en ce que la canalisation comporte à partir du passage de la coque (12) au moins deux tronçons dont les sections différentes décroissent de l'un à l'autre tronçon.

8. Dispositif suivant l'une quelconque des revendications 3 à 7, caractérisé en ce que la hauteur des faces latérales formées par les séparateurs de gouttes (5) est généralement comprise entre le tiers et le quart du diamètre (moyen) de la canalisation (1).

9. Dispositif suivant l'une quelconque des revendications 1 à 8, caractérisé en ce que la canalisation (1) est disposée radialement dans la tour de réfrigération (2).

10. Dispositif suivant l'une quelconque des revendications 1 à 8, caractérisé par deux canalisations (1) disposées parallèles et symétriques l'une à l'autre dans la tour de réfrigération (2).

11. Dispositif suivant l'une quelconque des revendications 1 à 10, caractérisé en ce que lorsque les canalisations (1) sont constituées d'au moins deux tronçons de diamètres décroissants, les compartiments ont une largeur chaque fois égale à celle du tronçon qui les porte.

12. Dispositif suivant l'une quelconque des revendications 1 à 10, caractérisé en ce que lorsque les canalisations (1) sont constituées d'au moins deux tronçons de diamètres décroissants les compartiments (4) ont tous la même largeur, de préférence celle du plus petit diamètre de la canalisation.

13. Dispositif suivant l'une quelconque des revendications 1 à 12, caractérisé en ce que les fermetures inférieures (8) des compartiments (4) sont constituées de planchers distincts des parois des canalisations.

14. Dispositif suivant la revendication 13, caractérisé en ce que les planchers (8) des compartiments sont horizontaux.

15. Dispositif suivant la revendication 13, caractérisé en ce que les planchers (8) des compartiments sont légèrement inclinés vers l'extérieur, en direction d'une rigole collectrice (10).

16. Dispositif suivant l'une quelconque des revendications 1 à 12, caractérisé en ce que les fermetures inférieures (8) des compartiments (4) sont constituées par la partie de la canalisation située sous les compartiments.

17. Dispositif suivant la revendication 16, caractérisé en ce que les faces latérales (9) situées dans le prolongement des séparateurs de gouttes (5) sont des parois étanches.

18. Dispositif suivant l'une quelconque des revendications 1 à 17, caractérisé en ce que l'ensemble des compartiments (4) d'une même section de canalisation est continu.

19. Dispositif suivant la revendication 18, caractérisé en ce que les panneaux des séparateurs (5) sont séparés uniquement par les éléments de support et en ce que deux compartiments contigus sont séparés uniquement par une seule cloison (6).

20. Dispositif suivant l'une quelconque des revendications 1 à 17, caractérisé en ce que l'ensemble des compartiments (4) d'une même section de canalisation est discontinu, chaque compartiment (4) étant pourvu de ses propres cloisons (6).

21. Dispositif suivant l'une quelconque des revendications 1 à 20, caractérisé par des moyens de communication entre compartiments (4) en vue de leur inspection.

22. Dispositif suivant l'une quelconque des revendications 1 à 20, caractérisé par des moyens d'évacuation de l'eau retenue dans les compartiments (4) et les séparateurs de gouttes (5), ces moyens comportant une rigole (10) sous chaque séparateur (5), un canal (11) en communication avec ladite rigole (10) et un espace (13) compris entre le plancher (8) et la paroi de la canalisation (1), lequel espace est en communication avec l'extérieur par un conduit (14) menant à l'égout ou à toute autre destination voulue.

## Claims

1. Device for injecting desulphurised flue gas into a natural draught cooling tower equipped with a shell through which the aforementioned gas is conducted via at least one pipe above the exchange body and drop separators of the cooling tower, characterised in that the pipe (1) is equipped with a means of passage (3) of the flue gas into at least one chamber (4) for regulating the speed of the flue gas, which chamber (4) is connected by means of at least one drop separator (5) with the inside of the cooling tower (2).

2. Device according to claim 1, characterised in that the pipe (1) is horizontal and has in its top part a longitudinal slot (3) surmounted by a succession of closed compartments (4) connected to the inside of the cooling tower by at least one drop separator panel (5).

3. Device according to claim 2, characterised in that the drop separator panels (5) form the longitudinal side faces of the compartments (4), which are furthermore each closed by transverse partitions (6), upper partitions (7) and lower partitions (8).

4. Device according to claim 3, characterised in that the drop separators (5) have vertical deflector elements.

5. Device according to claim 3, characterised in that the drop separators (5) have deflector elements, the inclination of which is clearly vertical.

6. Device according to any one of claims 2 to 5, characterised in that the width of the slot (3) is such that its total passage section is approximately equal to the section of the pipe on passage through the shell (12).

7. Device according to any one of claims 2 to 6, characterised in that the pipe is composed of, starting from the passage through the shell (12), at least two pieces, the different sections of which decrease from one piece to the other.

8. Device according to any one of claims 3 to 7, characterised in that the height of the sides faces formed by the drop separators (5) is generally between one third and one quarter of the (mean) diameter of the pipe (1).

9. Device according to any one of claims 1 to 8, characterised in that the pipe (1) is positioned radially in the cooling tower (2).

10. Device according to any one of claims 1 to 8, characterised in that there are two pipes (1) positioned in parallel and symmetrically to one another in the cooling tower (2).

11. Device according to any of claims 1 to 10, characterised in that whilst the pipes (1) consist of at least two pieces of decreasing diameter, the compartments are all of the same width as that of the piece carrying them.

12. Device according to any one of claims 1 to 10, characterised in that whilst the pipes (1) consist of at least two pieces of decreasing diameter, the compartments (4) are all of the same width, preferably that of the smallest diameter of the pipe.

13. Device according to any one of claims 1 to 12, characterised in that the lower closures (8) of the compartments (4) consist of floors separate from the walls of the pipe.

14. Device according to claim 13, characterised in that the floors (8) of the compartments are horizontal.

15. Device according to claim 13, characterised in that the floors (8) of the compartments are inclined slightly towards the outside, in the direction of a collecting groove (10).

16. Device according to any one of claims 1 to 12, characterised in that the lower closures (8) of the compartments (4) are composed of the part of the pipe situated under the compartments.

17. Device according to claim 16, characterised in that the side face (9) situated in the extension of the drop separators (5) are impervious walls.

18. Device according to any one of claims 1 to 17, characterised in that the system of compartments (4) of the same section of the pipe is continuous.

19. Device according to claim 18, characterised in that the panels of the separators (5) are separated solely by support elements, and in that two adjacent compartments are separate solely by a single partition (6).

20. Device according to any one of claims 1 to 17, characterised in that the system of compartments (4) of the same section of the pipe is discontinuous, each compartment (4) being equipped with its own partitions (6).

21. Device according to any one of claims 1 to 20, characterised in that there are means of communication between the compartments (4) for the purpose of inspecting them.

22. Device according to any one of claims 1 to 20, characterised in that there are means for evacuating the water held in the compartments (4) and the drop separators (5), these means comprising a groove (10) under each separator (5), a channel (11) connected to the said groove (10) and a space (13) between the floor (8) and the wall of the pipe (1), which space is connected to the outside by a conduit (14) leading to the drains or any other desired destination.

## Patentansprüche

1. Vorrichtung zur Einführung entschwefelter Verbrennungsgase in einen Kühlturm mit Naturzug, mit einer Schale durch welche die angeführten Gase mittels mindestens einer Leitung über den Austauschkörper und die Tropfenabscheider des Kühlturmes eingeleitet werden, dadurch gekennzeichnet, daß die Leitung (1) mit einer Einrichtung (3) für den Übertritt der Verbrennungsgase in mindestens eine Kammer (4) für die Steuerung der Geschwindigkeit der Verbrennungsgase versehen ist, wobei die Kammer (4) durch mindestens einen Tropfenabscheider (5) mit dem Inneren des Kühlturmes (2) verbunden ist.

2. Vorrichtung nach Anspruch 1, dadurch gekennzeichnet, daß die Leitung (1) horizontal verläuft und an ihrer Oberseite einen Längsschlitz (3) aufweist, und daß darüber eine Reihe von geschlossenen Kammern (4) vorgesehen ist, welche über mindestens ein Paneel mit Tropfenabscheidern (5) mit dem Inneren des Kühlturmes verbunden ist.

3. Vorrichtung nach Anspruch 2, dadurch gekennzeichnet, daß die Paneele mit den Tropfenabscheidern (5) die seitlichen Längswände der Kammern (4) bilden, welche außerdem durch querverlaufende (6) sowie obere (7) und untere (8) Trennwände verschlossen sind.

4. Vorrichtung nach Anspruch 3, dadurch gekennzeichnet, daß die Tropfenabscheider (5) senkrechte Ablenkelemente haben.

5. Vorrichtung nach Anspruch 3, dadurch gekennzeichnet, daß die Tropfenabscheider (5) Umlenkelemente aufweisen, deren Neigung im wesentlichen senkrecht ist.

6. Vorrichtung nach einem der Ansprüche 2 bis 5, dadurch gekennzeichnet, daß der Schlitz (3) eine derartige Breite aufweist, daß der gesamte Durchtrittsquerschnitt ungefähr gleich dem Querschnitt der Leitung beim Durchtritt durch die Schale (12) ist.

7. Vorrichtung nach einem der Ansprüche 2 bis 6, dadurch gekennzeichnet, daß die Leitung vom Durchtritt durch die Schale (12) mindestens zwei Abschnitte mit von einem zum anderen Abschnitt abnehmenden Querschnitt aufweist.

8. Vorrichtung nach einem der Ansprüche 3 bis 7, dadurch gekennzeichnet, daß die Höhe der durch die Tropfenabscheider (5) gebildeten Seitenflächen etwa zwischen einem Drittel und einem Viertel des (mittleren) Durchmessers der Leitung (1) liegt.

9. Vorrichtung nach einem der Ansprüche 1 bis 8, dadurch gekennzeichnet, daß die Leitung (1) im Kühlturm (2) radial angeordnet ist.

10. Vorrrichtung nach einem der Ansprüche 1 bis 8, dadurch gekennzeichnet, daß zwei parallel und symmetrisch zueinander liegende Leitungen (1) im Kühlturm angeordnet sind.

11. Vorrichtung nach einem der Ansprüche 1 bis 10, dadurch gekennzeichnet, daß bei Ausführung der Leitung (1) in mindestens zwei Teilstücken mit abnehmendem Durchmesser die Kammern eine Breite aufweisen, welche jeweils der der sie tragenden Kammer gleich ist.

12. Vorrichtung nach einem der Ansprüche 1 bis 10, dadurch gekennzeichnet, daß bei Ausführung der Leitung (1) in mindestens zwei Teilstücken mit abnehmendem Durchmesser alle Kammern (4) dieselbe Breite aufweisen, vorzugsweise eine Breite, welche gleich dem Durchmesser des kleinsten Leitungsstückes ist.

13. Vorrichtung nach einem der Ansprüche 1 bis 12, dadurch gekennzeichnet, daß die unteren Abschlüsse (8) der Kammern (4) durch Trennböden gebildet werden, welche nicht die Wände der Leitungen sind.

14. Vorrichtung nach Anspruch 13, dadurch gekennzeichnet, daß die Trennböden (8) der Kammern waagrecht sind.

15. Vorrichtung nach Anspruch 13, dadurch gekennzeichnet, daß die Trennböden (8) der Kammern nach außen hin in Richtung auf einen Sammelkanal (10) leicht geneigt sind.

16. Vorrichtung nach einem der Ansprüche 1 bis 12, dadurch gekennzeichnet, daß die unteren Abschlüsse (8) der Kammern (4) durch den Teil der Leitung gebildet werden, welche sich unter den Kammern befinden.

17. Vorrichtung nach Anspruch 16, dadurch gekennzeichnet, daß die Seitenwände (9) in Verlängerung der Tropfenabscheider (5) dichte Wände sind.

18. Vorrichtung nach einem der Ansprüche 1 bis 17, dadurch gekennzeichnet, daß die Kammern (4) ein und desselben Leitungsabschnittes eine kontinuierliche Einheit bilden.

19. Vorrichtung nach Anspruch 18, dadurch gekennzeichnet, daß die Abscheider-Paneele (5) nur durch die Stützelemente voneinander getrennt sind und daß zwei aneinander anschließende Kammern nur durch eine einzige Wand (6) voneinander getrennt sind.

20. Vorrichtung nach einem der Ansprüche 1 bis 17, dadurch gekennzeichnet, daß die Kammern (4) ein und desselben Leitungsabschnittes eine unterbrochene Einheit bilden, wobei jede Kammer (4) mit eigenen Wänden (6) ausgestattet ist.

21. Vorrichtung nach einem der Ansprüche 1 bis 20, dadurch gekennzeichnet, daß für die Untersuchung der Kammern (4) Mittel für einen Übergang von einer zur anderen Kammer vorgesehen sind.

22. Vorrichtung nach einem der Ansprüche 1 bis 20, gekennzeichnet durch Mittel zur Entwässerung des in den Kammern (4) und in den Tropfenabscheidern (5) zurückgehaltenen Wassers, wobei diese Mittel eine Entwässerungsrinne (10) unter jedem Abscheider (5), einen mit dieser Rinne (10) verbundenen Kanal (11) und einen Raum (13) zwischen dem Zwischenboden (8) und der Wandung der Leitung (1) umfassen, von welchem Raum eine Leitung (14) nach außen zu einer Entwässerung oder zu einem anderen beliebigen Ziel führt.

FIG. 1

FIG. 2

0 198 146

FIG. 4

FIG. 3A

FIG. 3B

FIG. 5

FIG. 6